# EUROPEAN PATENT SPECIFICATION

(11) **EP 3 841 773 B1**
(45) Date of publication and mention of the grant of the patent: **17.07.2024**
(21) Application number: 18930560.0
(22) Date of filing: 20.08.2018
(51) Int. Cl.: H04W 16/14, H04W 88/08, H04W 92/12

(54) **PREDICTIVE SPOT BIDDING SERVICE FOR NETWORK RESOURCES**
DIENST ZUM PRÄDIKTIVEN PUNKTUELLEN BIETEN FÜR NETZWERKRESSOURCEN
SERVICE D'ENCHÈRE PAR POINT PRÉDICTIF POUR DES RESSOURCES DE RÉSEAU

(43) Date of publication of application: 30.06.2021
(73) Proprietor: Cisco Technology, Inc., San Jose, California 95134-1706 (US)
(72) Inventor: CHAKRABORTY, Sourav, Fremont, California 94539 (US); PATIL, Santosh Ramrao, Santa Clara, California 95054 (US); ANANTHA, Swaminathan, Mountain View, California 94043 (US); PULARIKKAL, Gangadharan Byju, San Jose, California 95123 (US)
(74) Representative: Noble, Nicholas
(86) International application number: PCT/US2018/047104
(87) International publication number: WO 2020/040727

(56) References cited:
- US-A1- 2013 190 003
- US-A1- 2014 066 083
- US-A1- 2014 279 136
- US-A1- 2014 279 136
- US-A1- 2014 315 560
- US-A1- 2014 315 560
- US-A1- 2015 245 217
- US-A1- 2015 296 485
- US-A1- 2016 219 487
- US-B1- 10 003 546

## Description

### TECHNICAL FIELD

The present disclosure relates generally to bidding for network resources, and in particular to bidding for network resources to be used over an additional network interface of a network device.

### BACKGROUND

Edge routers and other network devices within a network, including networks with remote branch offices, often have both fixed broadband internet connectivity. Some edge routers experience variable levels of traffic, and to accommodate this, they support prepaid licensed spectrum connectivity up to a certain bandwidth with fixed service level agreement (SLA) parameters. However, pre-paid licensed spectrum access is expensive and the fact that SLAs are static in nature does not provide for predictive, dynamic, and cost effective slicing of network traffic flows at the edge network device. Current licensed spectrum service providers only provide static options for network usage, and currently dynamic bidding for additional network resources is unavailable.

For example, resource managers (such as MVNOs) pre-provision for a certain amount of static provisioning of capacity on route uplinks (e.g., LTE or 5G uplinks). The resource managers buy spectrum in bulk and allow users to uplink in accordance with the static provisioning. The user can buy chunks of spectrum for a month or other fixed period of time. If the entire spectrum isn't used, however, it gets wasted. In addition, if a network device needs more spectrum than has been provisioned, there's no way for it to do so in real time or on demand - it must work within the spectrum that has already been provisioned.

The document US 2014/315560 A1 (SMITH KIRK D [US] ET AL) 23 October 2014 (2014-10-23) discloses the dynamic allocation of wireless spectrum for utilization by operator networks. An operator network may enable users of mobile devices, such as cellular phones or other devices configured for wireless communication, to send and receive content over a wireless network. A certain amount of wireless spectrum may be dedicated for such communication by a government or other entity that controls or provides frequencies associated with the wireless spectrum for communicating the content. Certain embodiments herein relate to allocating the wireless spectrum for use by operator networks for servicing their customers. Thus, a limited amount of wireless spectrum may be divided or split among operator networks using certain techniques described herein.

The invention is defined by the appended set of claims.

### BRIEF DESCRIPTION OF THE DRAWINGS

The above-recited and other advantages and features of the present technology will become apparent by reference to specific implementations illustrated in the appended drawings. A person of ordinary skill in the art will understand that these drawings only show some examples of the present technology and would not limit the scope of the present technology to these examples. Furthermore, the skilled artisan will appreciate the principles of the present technology as described and explained with additional specificity and detail through the use of the accompanying drawings in which:
FIG. 1 shows an example schematic diagram of a bidding framework that includes a network device and a resource manager configured to provide additional resources to the network device in accordance with some embodiments.
FIG. 2 is a flowchart representation of providing additional resources to a network device in accordance with some embodiments.
FIG. 3 shows an example of a system for implementing certain aspects of the present technology.

### DESCRIPTION OF EXAMPLE EMBODIMENTS

Various examples of the present technology are discussed in detail below. While specific implementations are discussed, it should be understood that this is done for illustration purposes only.

### OVERVIEW:

Systems, methods, computer-readable media, and devices are disclosed for dynamically requesting a network resource. A network device can include a first network interface and a second network interface. A resource manager can receive from the network device a request for an additional resource for the second interface on the network device, the request including negotiation parameters for the additional resource. If a match to the request is found by the resource manager, the resource manager can send, to the network device, configuration parameters in accordance with the negotiation parameters for the additional resource to be used over the second network interface. The configuration parameters, once received by the network device, cause a modification of the network device such that the additional resource is used over the second network interface for a period of time.

### EXAMPLE EMBODIMENTS:

The disclosed technology addresses the need in the art for enabling a network device to dynamically provision additional network resources, such as additional licensed spectrum or bandwidth, on a real time or on demand basis. A network device, such as an edge router, can have multiple network interfaces including both statically provisioned (e.g., backhauls for pre-purchased spectrum or bandwidth) and one or more licensed spectrum interfaces (e.g., 4G/5G backhauls). Given that licensed spectrum costs can be high, traffic can be carried via the statically provisioned interface only as per the configured intent. Under certain conditions when the statically provisioned interface is not capable of traffic, the network device can request additional spectrum over the one or more licensed spectrum interfaces as demand requires, enabling the network device to dynamically handle its traffic requirements as needed or desired.

Additional licensed spectrum, or additional resources, can be provided by a service provider through a spot bidding framework managed by a resource manager. The network devices and the resource manager, along with the service providers, can negotiate through the spot bidding framework and configure additional resources, such as capacity and quality of service (QoS), to be used by the requesting network device. This enables optimized network usage for optimum performance of the network device and lowered costs to the end user. In some embodiments, the network device can request additional resources after observing that additional resources are needed to support its current traffic needs (e.g., based on the type of traffic it's handling and its current load). In alternative embodiments, a predictive engine on the network device can predict or determine whether additional resources should be requested.

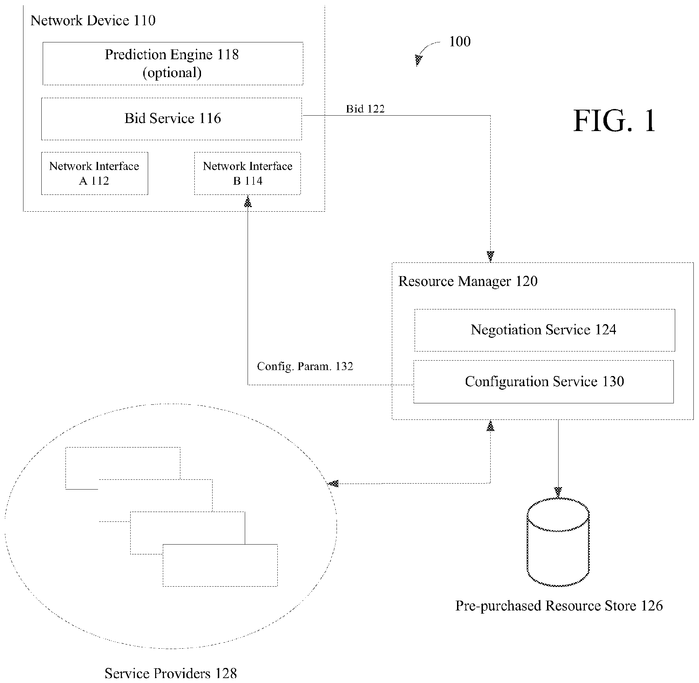

FIG. 1 shows an example schematic diagram of a spot bidding framework that includes a network device and a resource manager. The resource manager is configured to negotiate in a bidding process with service providers in order to identify and then provide additional resources to the network device in accordance with some embodiments.

In some embodiments, the network device can include a first network interface (e.g., statically provisioned) and a second network interface (e.g., capable of licensed spectrum connectivity), although any number of statically provisioned or licensed spectrum network interfaces can be used. A resource manager can receive from the network device a request for an additional resource for the second interface on the network device, the request including various negotiation parameters for the additional resource (e.g., type of connectivity desired, pricing parameters, etc.). Once an additional resource within the negotiation parameters is found by the resource manager, which interfaces with various spectrum service providers offering additional resources for purchase, the resource manager sends configuration parameters to the network device. The configuration parameters are in accordance with the negotiation parameters that specify the additional resource to be used over the second network interface. The configuration parameters, once received by the network device, cause a modification of the network device such that the additional resource is used over the second network interface over the period of time offered and agreed to by the service provider providing the additional resource.

System 100 illustrates an example embodiment system for dynamically requesting an additional network resource for use by network devices. As discussed above, the network devices can support statically provisioned connections and bandwidths as well as additional, often licensed spectrum that are provided on demand. For example, network device 110 can include multiple interfaces, such as network interface A 112 that provides fixed internet connectivity and one or more supplemental network interfaces, such as network interface B 114 that provides connectivity to a mobile network or licensed spectrum that can increase or decrease bandwidth in real time or near real time.

In system 100, resource manager 120 can receive a request (e.g., bid 122) from network device 110 for an additional resource for network interface B 114. The requesting bid 122 can be generated or created by bid service 116, which can include within bid 122 multiple negotiation parameters for the requested additional resource, such as the type of connectivity required, a desired time period, an acceptable price or price range, etc.

Bid service 116 requests additional network spectrum based on one or more network conditions, which can include (a) an observation that current network traffic is above a capability of the first network interface, and/or (b) a prediction that network traffic will be above the capability of the first network interface at a future time based on historical traffic data or currently executing application types.

For example, in some embodiments, bid 122 is sent to resource manager 120 based on a determination that the first network interface on the network device could benefit from an additional resource based on a dynamic determination that current network traffic is above a capability of network interface A 112. Any technique for monitoring traffic over network interface A 112 can be used for this dynamic determination, such that an increase in traffic over network interface A 112's capabilities can triggers bid 122 creation in bid service 116. Bid 122 can also be sent to resource manager 120 based on a determination that the resources needed to support currently executing application types exceeds a capability of network interface A 112.

Additionally and/or alternatively, bid 122 can be sent based on predictive determinations made by prediction engine 118. Specific types of applications may require more bandwidth or there could be predictable increases in load based on time of day, seasonal load, etc. Prediction engine 118 has the capability of identifying the type of connectivity desired, and how long additional network resources would need to be provided to network device 110 based on traffic prediction and/or application fingerprinting (e.g. presence of AR/VR applications in the network during a certain time of the day, high seasonal traffic requirements during holiday hours etc.). Prediction engine 118 can monitor and base predictions on historical traffic data indicative of current or upcoming time periods, such as traffic picking up during rush hour on a weekday. The prediction can be in real time, near real time, or periodic based on the prediction engine's 118 configured intent.

In some embodiments, prediction engine 118 can utilize one or more predictive models based on load and type of applications being executed to calculate future bandwidth/spectrum needs of network device 110. If the predictive models predict a future bandwidth usage that potentially exceeds the bandwidth capabilities provided by network interface A 112, prediction engine 118 can notify bid service 116 of the additional spectrum or bandwidth needed so that bid 122 can be generated that requests the needed additional spectrum or bandwidth from resource manager 120. Prediction engine 118 in conjunction with bid service 116 can use, in some examples, a defined API interface with resource manager 120 to spot bid and negotiate for additional network resources including, but not limited to, bandwidth, quality of service (QOS), duration, capacity, etc. in real time or near real time as demand increases (or decreases).

Resource manager 120, which in some examples can be controlled by a mobile virtual network operator, can receive bid 122 for the additional resource which includes negotiation parameters corresponding to the additional resource requested by network device 110. Bid 122 can include, but is not limited to including, a bid price and a type of additional resource. The type of additional resource can be specified by parameters that include, but is not limited to including, one or more of a duration, data volume, quality of service, or service level agreement parameter.

Once bid 122 is received by resource manager 120, negotiation service 124 can negotiate on behalf of network device 110 to match bid 122 with a service provider offering the requested additional resources. In some embodiments, resource manager 120 includes an inventory of pre-purchased offers from service providers who can provide additional resources. The pre-purchased offers can be stored in pre-purchased resource store 126, which can store the resources offered for purchase as well as resource parameters that can be matched with bid's 122 negotiation parameters. Based on a match to the negotiation parameters within bid 122, negotiation service 124 can select the corresponding offer for the additional network spectrum from a service provider in pre-purchased resource store 126, which can then be provided by the selected service provider for a period of time specified by the service provider or by bid 122. In some embodiments, if there are no service providers who offer resources in accordance with the negotiation parameters in pre-purchased resource store 126, negotiation service 124 can interface with outside service providers 128 to solicit offers that match the negotiation parameters in bid 122.

Once an offer is matched with bid 122, configuration service 130 can generate configuration parameters 132 that enable network device 110 to establish connectivity over network interface B 114. The configuration parameters 132 are sent to network device 110, which modifies network interface B 114 to establish connectivity in accordance with the additional resources for a period of time within service provider's offer. For example, the configuration parameters 132 can cause a reprograming of network device 110 to enable usage of the additional network spectrum over network interface B 114 over the period of time.

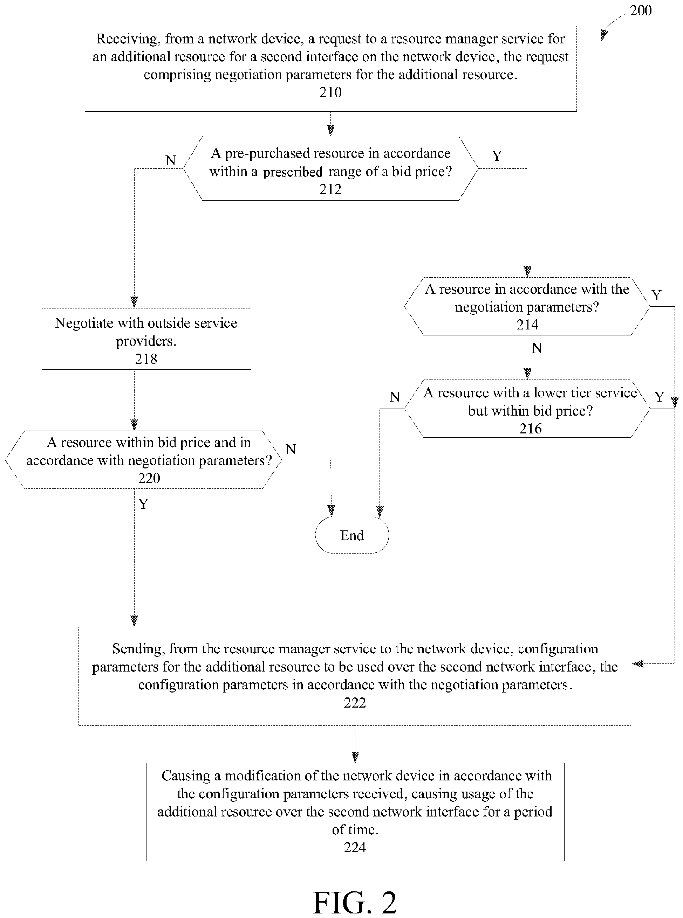

FIG. 2 is a flowchart representation of providing additional resources to a network device in accordance with some embodiments. The spot bidding process can begin when a network device (e.g., network device 110) sends a request (e.g., bid 122) to the resource manager 120 for an additional resource for network interface B 114 (step 210). The request can be based on an observation or prediction that network device 110 may require additional resource connectivity over network interface B 114. Bid service 116, for example, can use a defined API interface with the resource manager 120 to negotiate a bidding policy for the additional resources. For example, the request includes one or more negotiation parameters, some of which may be fixed and some of which may be open to service provider counteroffers. For example, the negotiation parameters can include additional spectrum for a specified length of time and for a specified price, but while the price parameters may be fixed, the length of time may be shortened to what the service provider can offer.

The negotiation parameters define how the resource manager 120 matches network device 110 with a service provider offering additional resources. The negotiation parameters specify a type of resource requested (e.g., duration, data volume, quality of service, SLA parameters, etc.), an IMEI number, a bid price (e.g., a range of the maximum and minimum acceptable bidding price for the requested resources), etc. to assist resource manager 120 in the bidding process.

Resource manager 120 can include an inventory of resources offered by a number of service providers, all or at least a portion of the inventory of resources being pre-purchased by the resource manager 120. Based on the request, the manager resource 120 can search its available inventory of resources to be programmed and evaluate the current cost offering for the requested parameter as per the bid price range.

Resource manager 120 can determine if the inventory of pre-purchased resources contains a resource in accordance within the prescribed bid price specified by the negotiation parameters of bid 122 (step 212). If the inventory contains a resource within the bid price/price range, resource manager 120 will determine if the resource is matched to or otherwise in accordance with the negotiation parameters (step 214).

For example, resource manager 120 can use its internal available or unused resources from the pool of connections it purchased or otherwise contracted from various service providers. Based on the requested resource, resource manager 120 can select an appropriate available or unused connection. The pre-purchased resources can also be searched and selected based on geographic location, since service providers located closer to network device 110 can offer resources with higher tier services or lower prices than service providers located farther away.

Resource manager 120 can optimize pricing and the quality of resource offered to network device 110. Where available, resource manager 120 can interact with the mobile service providers to retrieve instantaneous resource vs. cost estimates. Resource manager 120 can utilize a resource vs. cost mapping function that is most optimal within the range of the customer bid.

If a match to bid 122 is found, the resource is selected by resource manager 120. If not, in some embodiments, resource manager 120 can select the next best offer(s), such as checking its inventory to see if a resource with a lower tier service, but still within the bid price, is available (step 216). In some embodiments, however, step 216 can be skipped if bid 122 specifies that a lower tier service is not acceptable (or bid 122 can specify that only resources above a threshold tier is acceptable).

In some embodiments, all or a portion of the negotiation parameters in the request are not modifiable by resource manager 120. If a pre-purchased resource is not within the bid price range or negotiation parameters, resource manager 120 can communicate and negotiate with outside service providers for an additional resource in accordance with the request (step 218). If an outside service provider can provide an offer for a resource that matches bid 122's negotiation parameters, then that resource is selected by resource manager 120 to fulfill network device 110's request (step 220).

Acceptance by network device 110 may be required before initiating the licensed spectrum in some examples. If a resource is selected (either from a pre-purchased resource or from an outside service provider), resource manager 120 can send the service provider's offer to network device 110 for acceptance (in other embodiments, this step can be skipped and the first resource meeting the bid price and negotiation parameters are automatically accepted). If an acceptance is required, network device 110 can reply to resource manager 120 with parameters associated with a response type (e.g., accept the offer, proposed new request, new cost structure, proposed alternate policy, reject the offer, etc.). The network device reply can also include a map of values per response type (such as values related to a proposed new cost structure or proposed alternate policy). The service provider may also negotiate with network device 110 through resource manager 120. For example, resource manager 120 can offer a new higher price for the requested resources or propose a lower tier service within the proposed cost on behalf of the service provider. Prediction engine 118 can either accept the proposal or go on a bidding loop with resource manager 120 until an acceptable offer is found according to the negotiation parameters. If prediction engine 118 accepts a proposed policy, it will send an acknowledge message to resource manager 120 with the parameters of the accepted policy.

Once a selection of a resource is finalized, such as through an acknowledgement from the network device 110, resource manager 120 can send configuration parameters 132 for the additional resource to be used over network interface B 114 (step 222). The configuration parameters 132 cause a modification of network device 110 to enable usage of the additional resource over network interface B 114 (step 224). For example, resource manager 120 will send configuration information to network device 110, which will in turn configure the network device's programmable sim with the details of the service provider and the connectivity parameters. At that point, network device 110 will start forwarding traffic of the chosen flows via the licensed spectrum interface (network interface B 114).

In some embodiments, the additional resource is automatically terminated over the network interface B 114 when the period of time that has been negotiated for has expired. Resource manager 120 can disable the service, for example, by removing the MNO database entry for the edge router IMEI and inform the edge router via a service complete API.

In other embodiments, the additional resource over the network interface B 115 is extended after the period of negotiated time has expired, and the network device is charged a price based on the actual usage of the additional resource within the extended time. If the prediction engine 118 decides that it needs to extend the resource usage further (such as through one or more predictive models), it will renegotiate the contract with resource manager 120 prior to the expiry of the previous contract.

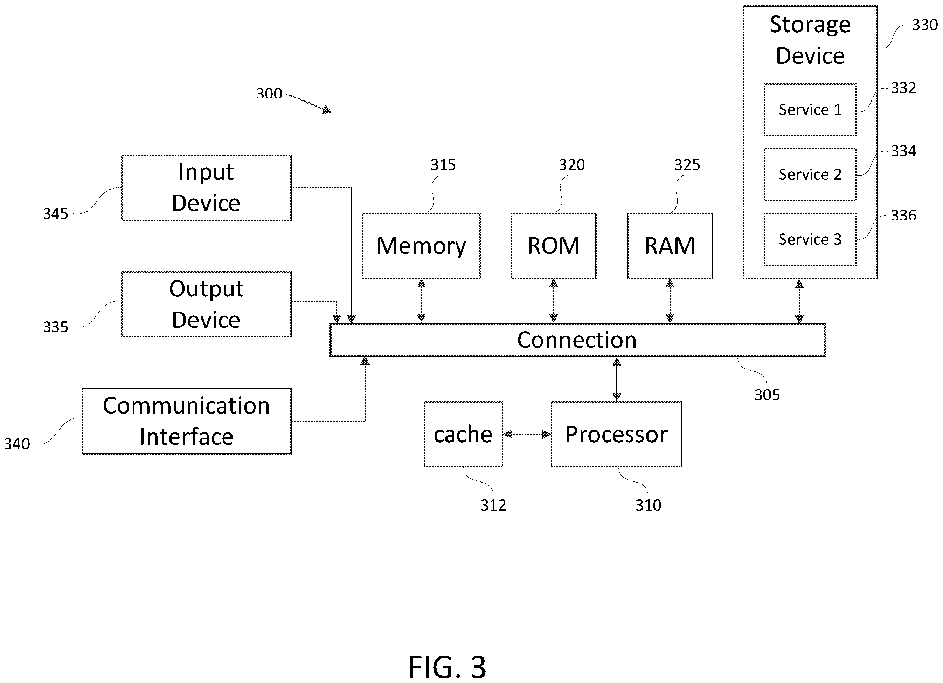

FIG. 3 shows an example of computing system 300 in which the components of the system are in communication with each other using connection 305. Connection 305 can be a physical connection via a bus, or a direct connection into processor 310, such as in a chipset architecture. Connection 305 can also be a virtual connection, networked connection, or logical connection.

In some embodiments computing system 300 is a distributed system in which the functions described in this disclosure can be distributed within a datacenter, multiple datacenters, a peer network, etc. In some embodiments, one or more of the described system components represents many such components each performing some or all of the function for which the component is described. In some embodiments, the components can be physical or virtual devices.

Example system 300 includes at least one processing unit (CPU or processor) 310 and connection 305 that couples various system components including system memory 315, such as read only memory (ROM) and random access memory (RAM) to processor 310. Computing system 300 can include a cache of high-speed memory connected directly with, in close proximity to, or integrated as part of processor 310.

Processor 310 can include any general purpose processor and a hardware service or software service, such as services 332, 334, and 336 stored in storage device 330, configured to control processor 310 as well as a special-purpose processor where software instructions are incorporated into the actual processor design. Processor 310 may essentially be a completely self-contained computing system, containing multiple cores or processors, a bus, memory controller, cache, etc. A multi-core processor may be symmetric or asymmetric.

To enable user interaction, computing system 300 includes an input device 345, which can represent any number of input mechanisms, such as a microphone for speech, a touch-sensitive screen for gesture or graphical input, keyboard, mouse, motion input, speech, etc. Computing system 300 can also include output device 335, which can be one or more of a number of output mechanisms known to those of skill in the art. In some instances, multimodal systems can enable a user to provide multiple types of input/output to communicate with computing system 300. Computing system 300 can include communications interface 340, which can generally govern and manage the user input and system output. There is no restriction on operating on any particular hardware arrangement and therefore the basic features here may easily be substituted for improved hardware or firmware arrangements as they are developed.

Storage device 330 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read only memory (ROM), and/or some combination of these devices.

The storage device 330 can include software services, servers, services, etc., that when the code that defines such software is executed by the processor 310, it causes the system to perform a function. In some embodiments, a hardware service that performs a particular function can include the software component stored in a computer-readable medium in connection with the necessary hardware components, such as processor 310, connection 305, output device 335, etc., to carry out the function.

For clarity of explanation, in some instances the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program, or a collection of programs that carry out a specific function. In some embodiments, a service can be considered a server. The memory can be a non-transitory computer-readable medium.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, solid state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method for dynamically requesting a network resource comprising:
receiving, from a network device comprising a first network interface and a second network interface, a request to a resource manager service for an additional resource for the second interface on the network device, the request comprising negotiation parameters for the additional resource;
sending, from the resource manager service to the network device, configuration parameters for the additional resource to be used over the second network interface, the configuration parameters being in accordance with the negotiation parameters; and
**characterised in that**
the configuration parameters are for causing a modification of a programmable SIM, Subscriber Identification Module, of the network device when received thereby so as to cause usage of the additional resource over the second network interface for a period of time.

2. The method of claim 1, wherein the request for an additional resource comprises a bid price and a type of additional resource comprising at least one of a duration, data volume, quality of service, or service level agreement parameter.

3. The method of claim 1 or 2, wherein the resource manager comprises an inventory of resources offered by a plurality of service providers, at least a portion of the inventory of resources that have been pre-purchased.

4. The method of claim 3, wherein the resource manager selects a resource from the portion of the inventory of resources that have been pre-purchased, the resource being within a prescribed range of a bid price and in accordance with the negotiation parameters.

5. The method of claim 3, wherein, upon a determination that none of the plurality of service providers offer a resource within a prescribed range of a bid price, the resource manager selects a resource from the portion of the inventory of resources that have been pre-purchased with a lower tier service within the prescribed range of the bid price.

6. The method of any preceding claim, wherein at least one of:
based on a determination that a plurality of service providers do not offer the additional resource in accordance with the negotiation parameters, the resource manager communicates with service providers outside the plurality of service providers for the additional resource in accordance with the request;
the additional resource is automatically terminated over the second network interface when the period of time has expired;
additional resource over the second network interface is extended after the period of time has expired, and the network device is charged based on actual usage of the additional resource within the extended time;
the negotiation parameters comprises additional spectrum for a specified length of time and for a specified price.

7. A non-transitory computer-readable medium comprising instructions stored thereon, the instructions executable by one or more processors of a computing system to perform a method for dynamically requesting a network resource, the instructions causing the computing system to:
receive, from a network device comprising a first network interface and a second network interface, a request to a resource manager service for an additional resource for the second interface on the network device, the request comprising negotiation parameters for the additional resource;
send, from the resource manager service to the network device, configuration parameters for the additional resource to be used over the second network interface, the configuration parameters being in accordance with the negotiation parameters; and
**characterised in that**
the configuration parameters are for causing a modification of a programmable SIM, Subscriber Identification Module, of the network device when received thereby so as to cause usage of the additional resource over the second network interface for a period of time.

8. The non-transitory computer-readable medium of claim 7, wherein the request for an additional resource comprises a bid price and a type of additional resource comprising at least one of a duration, data volume, quality of service, or service level agreement parameter.

9. The non-transitory computer-readable medium of claim 7 or 8, wherein the resource manager comprises an inventory of resources offered by a plurality of service providers, at least a portion of the inventory of resources that have been pre-purchased.

10. The non-transitory computer-readable medium of claim 9, wherein the resource manager selects a resource from the portion of the inventory of resources that have been pre-purchased, the resource being within a prescribed range of a bid price and in accordance with the negotiation parameters.

11. The non-transitory computer-readable medium of claim 9, wherein, upon a determination that none of the plurality of service providers offer a resource within a prescribed range of a bid price, the resource manager selects a resource from the portion of the inventory of resources that have been pre-purchased with a lower tier service within the prescribed range of the bid price.

12. The non-transitory computer-readable medium of any of claims 7 to 11, wherein at least one of:
based on a determination that a plurality of service providers do not offer the additional resource in accordance with the negotiation parameters, the resource manager communicates with service providers outside the plurality of service providers for the additional resource in accordance with the request;
the additional resource is automatically terminated over the second network interface when the period of time has expired;
wherein the additional resource over the second network interface is extended after the period of time has expired, and the network device is charged based on actual usage of the additional resource within the extended time;
the negotiation parameters comprises additional spectrum for a specified length of time and for a specified price.

13. A system for dynamically requesting a network resource, the system comprising:
a network device on a network comprising a first network interface and a second network interface, wherein the network device:
predicts that a first network interface on the network device could benefit from an additional resource;
based on the prediction, sends a request to a resource manager service for the additional resource, the request comprising negotiation parameters for the additional resource; and
a resource manager in communication with the network device, wherein the resource manager:
selects a resource from a service provider within a prescribed range of a bid price and in accordance with the negotiation parameters of the request;
sends configuration parameters to the network device for the additional resource to be used over the second network interface; and
**characterised in that**
the configuration parameters are for causing modification of a programmable SIM, Subscriber Identification Module, of the network device received thereby so as to cause usage of the additional resource over the second network interface for a period of time.

14. The system of claim 13, wherein the resource manager comprises an inventory of resources offered by a plurality of service providers, at least a portion of the inventory of resources that have been pre-purchased.

## Patentansprüche

1. Ein Verfahren zum dynamischen Anfordern einer Netzwerkressource, das Folgendes aufweist:
Empfangen, von einem Netzwerkgerät, das eine erste Netzwerkschnittstelle und eine zweite Netzwerkschnittstelle umfasst, einer Anfrage an einen Ressourcenmanager-Dienst für eine zusätzliche Ressource für die zweite Schnittstelle auf der Netzwerkvorrichtung, wobei die Anfrage Verhandlungsparameter für die zusätzliche Ressource aufweist;
Senden von Konfigurationsparametern für die zusätzliche Ressource, die über die zweite Netzwerkschnittstelle verwendet werden soll, von dem Ressourcenmanager-Dienst an das Netzwerkgerät, wobei die Konfigurationsparameter mit den Verhandlungsparametern übereinstimmen; und
**dadurch gekennzeichnet, dass** die Konfigurationsparameter dazu dienen, eine Modifikation einer programmierbaren SIM (Subscriber Identification Module) des Netzwerkgerätes zu bewirken, wenn sie von diesem empfangen werden, um die Nutzung der zusätzlichen Ressource über die zweite Netzwerkschnittstelle für eine Zeitspanne zu bewirken.

2. Verfahren nach Anspruch 1, wobei die Anfrage einer zusätzlichen Ressource einen Gebotspreis und einen Typ der zusätzlichen Ressource aufweist, der mindestens einen Parameter aus Dauer, Datenvolumen, Empfangsqualität oder Dienstgütevereinbarungsparameter umfasst.

3. Verfahren nach Anspruch 1 oder 2, wobei der Ressourcenmanager ein Ressourceninventar aufweist, das von einer Vielzahl von Dienstabietern angeboten wird, wobei mindestens ein Teil des Ressourceninventars vorab gekauft wurde.

4. Verfahren nach Anspruch 3, wobei der Ressourcenmanager eine Ressource aus dem Teil des Ressourceninventars auswählt, der vorab gekauft wurde, wobei die Ressource innerhalb eines vorgegebenen Bereichs eines Gebotspreises und in Übereinstimmung mit den Verhandlungsparametern liegt.

5. Verfahren nach Anspruch 3, wobei der Ressourcenmanager bei der Feststellung, dass keiner der mehreren Dienstabieter eine Ressource innerhalb eines vorgeschriebenen Bereichs eines Gebotspreises anbietet, eine Ressource aus dem Teil des Ressourceninventars auswählt, der mit einem Dienst niedrigerer Qualitätsstufe innerhalb des vorgeschriebenen Bereichs des Gebotspreises vorab gekauft wurde.

6. Das Verfahren nach einem der vorhergehenden Ansprüche, wobei mindestens eine der folgenden Bedingungen erfüllt ist:
Basierend auf der Feststellung, dass eine Vielzahl von Dienstanbietern die zusätzliche Ressource nicht in Übereinstimmung mit den Verhandlungsparametern anbietet, kommuniziert der Ressourcenmanager mit Dienstanbietern außerhalb der Vielzahl von Dienstanbietern für die zusätzliche Ressource in Übereinstimmung mit der Anfrage;
Die zusätzliche Ressource wird über die zweite Netzwerkschnittstelle automatisch beendet, wenn die Zeitspanne abgelaufen ist;
Die zusätzliche Ressource über die zweite Netzwerkschnittstelle wird nach Ablauf der Zeitspanne verlängert und dem Netzwerkgerät auf der Grundlage der tatsächlichen Nutzung der zusätzlichen Ressource innerhalb der verlängerten Zeit in Rechnung gestellt;
Die Verhandlungsparameter weisen zusätzliche Bandbreite für einen bestimmten Zeitraum und zu einem bestimmten Preis auf.

7. Ein nicht-flüchtiges computerlesbares Medium, das darauf gespeicherte Befehle aufweist, wobei die Befehle von einem oder mehreren Prozessoren eines Computersystems ausgeführt werden können, um ein Verfahren zum dynamischen Anfordern einer Netzwerkressource durchzuführen, wobei die Befehle das Computersystem dazu veranlassen:
- Empfangen einer Anfrage an einen Ressourcenmanager-Dienst für eine zusätzliche Ressource für die zweite Schnittstelle auf der Netzwerkvorrichtung von einer Netzwerkvorrichtung, die eine erste Netzwerkschnittstelle und eine zweite Netzwerkschnittstelle aufweist, wobei die Anfrage Verhandlungsparameter für die zusätzliche Ressource aufweist;
- Senden von Konfigurationsparametern für die zusätzliche Ressource, die über die zweite Netzwerkschnittstelle verwendet werden soll, von dem Ressourcenmanager-Dienst an die Netzwerkvorrichtung, wobei die Konfigurationsparameter mit den Verhandlungsparametern übereinstimmen; und
**dadurch gekennzeichnet, dass** die Konfigurationsparameter dazu dienen, eine Modifikation eines programmierbaren SIM (Subscriber Identification Module) des Netzwerkgerätes zu bewirken, wenn sie von diesem empfangen werden, um die Nutzung der zusätzlichen Ressource über die zweite Netzwerkschnittstelle für eine bestimmte Zeitspanne zu bewirken.

8. Nicht-flüchtiges computerlesbares Medium nach Anspruch 7, wobei die Anfrage einer zusätzlichen Ressource einen Gebotspreis und einen Typ der zusätzlichen Ressource aufweist, der mindestens einen Parameter aus Dauer, Datenvolumen, Empfangsqualität oder Dienstgütevereinbarungsparameter umfasst.

9. Nicht-flüchtiges computerlesbares Medium nach Anspruch 7 oder 8, wobei der Ressourcenmanager ein Ressourceninventar aufweist, das von einer Vielzahl von Dienstanbietern angeboten wird, wobei zumindest ein Teil des Ressourceninventars vorab gekauft worden ist.

10. Nicht-flüchtiges computerlesbares Medium nach Anspruch 9, wobei der Ressourcenmanager eine Ressource aus dem Teil des Ressourceninventars auswählt, der vorab gekauft wurde, wobei die Ressource innerhalb eines vorgegebenen Bereichs eines Gebotspreises und in Übereinstimmung mit den Verhandlungsparametern liegt.

11. Nicht-flüchtiges computerlesbares Medium nach Anspruch 9, wobei bei einer Feststellung, dass keiner der mehreren Dienstabieter eine Ressource innerhalb eines vorgeschriebenen Bereichs eines Gebotspreises anbietet, der Ressourcenmanager eine Ressource aus dem Teil des Ressourceninventars auswählt, der mit einem Dienst niedrigerer Qualitätsstufe innerhalb des vorgeschriebenen Bereichs des Gebotspreises vorab gekauft wurde.

12. Nicht-flüchtiges computerlesbares Medium nach einem der Ansprüche 7 bis 11, wobei mindestens eines der folgenden Merkmale vorliegt:
Basierend auf der Feststellung, dass eine Vielzahl von Dienstanbietern die zusätzliche Ressource nicht in Übereinstimmung mit den Verhandlungsparametern anbieten, kommuniziert der Ressourcenmanager mit Dienstanbietern außerhalb der Vielzahl von Dienstanbietern für die zusätzliche Ressource in Übereinstimmung mit der Anfrage;
Die zusätzliche Ressource wird über die zweite Netzwerkschnittstelle automatisch beendet, wenn die Zeitspanne abgelaufen ist;
wobei die zusätzliche Ressource über die zweite Netzwerkschnittstelle nach Ablauf des Zeitraums verlängert wird und dem Netzwerkgerät auf der Grundlage der tatsächlichen Nutzung der zusätzlichen Ressource innerhalb der verlängerten Zeit in Rechnung gestellt wird;
Die Verhandlungsparameter weisen zusätzliche Frequenzen für einen bestimmten Zeitraum und zu einem bestimmten Preis auf.

13. Ein System zum dynamischen Anfordern einer Netzwerkressource, wobei das System Folgendes aufweist:
Netzwerkgerät in einem Netzwerk, das eine erste Netzwerkschnittstelle und eine zweite Netzwerkschnittstelle aufweist, wobei das Netzwerkgerät:
voraussagt, dass eine erste Netzwerkschnittstelle des Netzwerkgeräts von einer zusätzlichen Ressource profitieren könnte;
sendet auf der Grundlage der Vorhersage eine Anfrage an einen Ressourcenmanager-Dienst für die zusätzliche Ressource, wobei die Anfrage Verhandlungsparameter für die zusätzliche Ressource aufweist; und
ein Ressourcenmanager in Kommunikation mit dem Netzwerkgerät, wobei der Ressourcenmanager:
Wählt eine Ressource von einem Dienstanbieter innerhalb eines vorgegebenen Bereichs eines Gebotspreises und in Übereinstimmung mit den Verhandlungsparametern der Anfrage aus;
Sendet Konfigurationsparameter an das Netzwerkgerät für die zusätzliche Ressource, die über die zweite Netzwerkschnittstelle verwendet werden soll; und
**dadurch gekennzeichnet, dass** die Konfigurationsparameter dazu dienen, eine Modifikation eines programmierbaren SIM (Subscriber Identification Module) der dadurch empfangenen Netzwerkvorrichtung zu bewirken, um die Nutzung der zusätzlichen Ressource über die zweite Netzwerkschnittstelle für eine Zeitspanne zu bewirken.

14. System nach Anspruch 13, wobei der Ressourcenmanager ein Ressourceninventar aufweist, das von einer Vielzahl von Dienstabietern angeboten wird, wobei mindestens ein Teil des Ressourceninventars vorab gekauft wurde.

## Revendications

1. Procédé de demande dynamique d'une ressource réseau, ledit procédé comprenant :
la réception, en provenance d'un dispositif réseau comprenant une première interface réseau et une deuxième interface réseau, d'une demande faite à un service gestionnaire de ressources concernant une ressource supplémentaire pour la deuxième interface sur le dispositif réseau, la demande comprenant des paramètres de négociation pour la ressource supplémentaire ;
l'envoi, depuis le service gestionnaire de ressources vers le dispositif réseau, de paramètres de configuration pour la ressource supplémentaire devant être utilisée sur la deuxième interface réseau, les paramètres de configuration étant en conformité avec les paramètres de négociation ; et
**caractérisé en ce que** les paramètres de configuration servent à provoquer une modification d'un SIM - module d'identification de l'abonné - programmable du dispositif réseau lorsque ladite modification a été reçue par ledit module d'identification de l'abonné, de manière à provoquer une utilisation de la ressource supplémentaire sur la deuxième interface réseau pendant une certaine période de temps.

2. Procédé selon la revendication 1, dans lequel la demande concernant une ressource supplémentaire comprend un prix d'offre et un type de ressource supplémentaire comprenant au moins l'un ou l'une de ceux ou celles parmi une durée, un volume de données, une qualité de service ou un paramètre d'accord de niveau de service.

3. Procédé selon la revendication 1 ou 2, dans lequel le gestionnaire de ressources comprend un inventaire de ressources offertes par une pluralité de prestataires de services, ledit gestionnaire de ressources comprenant au moins une partie de l'inventaire des ressources qui ont été préachetées.

4. Procédé selon la revendication 3, dans lequel le gestionnaire de ressources sélectionne une ressource parmi la partie de l'inventaire des ressources qui ont été préachetées, la ressource se situant dans une fourchette prescrite d'un prix de l'offre et étant en conformité avec les paramètres de négociation.

5. Procédé selon la revendication 3, dans lequel, lorsqu'il a été déterminé qu'aucun de ceux parmi la pluralité de prestataires services n'offre une ressource se situant dans une fourchette prescrite d'un prix de l'offre, le gestionnaire de ressources sélectionne une ressource parmi la partie de l'inventaire des ressources qui ont été préachetées avec un service de niveau inférieur dans la fourchette prescrite du prix de l'offre.

6. Procédé selon l'une quelconque des revendications précédentes, dans lequel il se produit au moins l'un ou l'autre des faits qui suivent :
en se basant sur une détermination du fait qu'une pluralité de prestataires de services n'offre pas la ressource supplémentaire en conformité avec les paramètres de négociation, le gestionnaire de ressources communique avec des prestataires de services se trouvant en dehors de la pluralité de prestataires de services pour la ressource supplémentaire en conformité avec la demande ;
la ressource supplémentaire est automatiquement achevée sur la deuxième interface réseau lorsque la période de temps a expiré ;
la ressource supplémentaire sur la deuxième interface réseau est étendue après l'expiration de la période de temps, et le dispositif réseau est chargé en fonction de l'utilisation en cours de la ressource supplémentaire dans les limites du temps prolongé ;
les paramètres de négociation comprennent un spectre supplémentaire pour une durée de temps spécifiée et pour un prix spécifié.

7. Support non transitoire lisible par ordinateur, support sur lequel sont stockées des instructions exécutables par un ou plusieurs processeurs d'un système informatique, afin de mettre en œuvre un procédé de demande dynamique d'une ressource réseau, les instructions amenant le système informatique à :
recevoir, en provenance d'un dispositif réseau comprenant une première interface réseau et une deuxième interface réseau, une demande faite à un service gestionnaire de ressources concernant une ressource supplémentaire pour la deuxième interface sur le dispositif réseau, la demande comprenant des paramètres de négociation pour la ressource supplémentaire ;
envoyer, depuis le service gestionnaire de ressources vers le dispositif réseau, des paramètres de configuration pour la ressource supplémentaire devant être utilisée sur la deuxième interface réseau, les paramètres de configuration étant en conformité avec les paramètres de négociation ; et
**caractérisé en ce que** les paramètres de configuration servent à provoquer une modification d'un SIM - module d'identification de l'abonné - programmable du dispositif réseau lorsque ladite modification a été reçue par ledit module d'identification de l'abonné, de manière à provoquer une utilisation de la ressource supplémentaire sur la deuxième interface réseau pendant une certaine période de temps.

8. Support non transitoire lisible par ordinateur selon la revendication 7, dans lequel la demande concernant une ressource supplémentaire comprend un prix d'offre et un type de ressource supplémentaire comprenant au moins l'un ou l'une de ceux ou celles parmi une durée, un volume de données, une qualité de service ou un paramètre d'accord de niveau de service.

9. Support non transitoire lisible par ordinateur selon la revendication 7 ou 8, dans lequel le gestionnaire de ressources comprend un inventaire de ressources offertes par une pluralité de prestataires de services, ledit gestionnaire de ressources comprenant au moins une partie de l'inventaire des ressources qui ont été préachetées.

10. Support non transitoire lisible par ordinateur selon la revendication 9, dans lequel le gestionnaire de ressources sélectionne une ressource parmi la partie de l'inventaire des ressources qui ont été préachetées, la ressource se situant dans une fourchette prescrite d'un prix de l'offre et étant en conformité avec les paramètres de négociation.

11. Support non transitoire lisible par ordinateur selon la revendication 9, dans lequel, lorsqu'il a été déterminé qu'aucun de ceux parmi la pluralité de prestataires services n'offre une ressource se situant dans une fourchette prescrite d'un prix de l'offre, le gestionnaire de ressources sélectionne une ressource parmi la partie de l'inventaire des ressources qui ont été préachetées avec un service de niveau inférieur dans la fourchette prescrite du prix de l'offre.

12. Support non transitoire lisible par ordinateur selon l'une quelconque des revendications 7 à 11, dans lequel il se produit au moins l'un ou l'autre des faits qui suivent :
en se basant sur une détermination du fait qu'une pluralité de prestataires de services n'offre pas la ressource supplémentaire en conformité avec les paramètres de négociation, le gestionnaire de ressources communique avec des prestataires de services se trouvant en dehors de la pluralité de prestataires de services pour la ressource supplémentaire en conformité avec la demande ;
la ressource supplémentaire est automatiquement achevée sur la deuxième interface réseau lorsque la période de temps a expiré ;
support dans lequel la ressource supplémentaire sur la deuxième interface réseau est étendue après l'expiration de la période de temps, et le dispositif réseau est chargé en fonction de l'utilisation en cours de la ressource supplémentaire dans les limites du temps prolongé ;
les paramètres de négociation comprennent un spectre supplémentaire pour une durée de temps spécifiée et pour un prix spécifié.

13. système de demande dynamique d'une ressource réseau, ledit système comprenant :
un dispositif réseau sur un réseau comprenant une première interface réseau et une deuxième interface réseau, système dans lequel le dispositif réseau :
prévoit qu'une première interface réseau sur le dispositif réseau pourrait bénéficier d'une ressource supplémentaire ;
en fonction de la prévision, ledit dispositif réseau envoie une demande au service gestionnaire de ressources concernant la ressource supplémentaire, la demande comprenant des paramètres de négociation pour la ressource supplémentaire ; et
ledit système comprend un gestionnaire de ressources en communication avec le dispositif réseau, système dans lequel le gestionnaire de ressources :
sélectionne une ressource auprès d'un prestataire de services, ladite ressource se situant dans une fourchette prescrite d'un prix de l'offre et étant en conformité avec les paramètres de négociation de la demande ;
envoie des paramètres de configuration au dispositif réseau pour la ressource supplémentaire devant être utilisée sur la deuxième interface réseau ; et
**caractérisé en ce que** les paramètres de configuration servent à provoquer une modification d'un SIM - module d'identification de l'abonné - programmable du dispositif réseau lorsque ladite modification a été reçue par ledit module d'identification de l'abonné, de manière à provoquer une utilisation de la ressource supplémentaire sur la deuxième interface réseau pendant une certaine période de temps.

14. système selon la revendication 13, dans lequel le gestionnaire de ressources comprend un inventaire de ressources offertes par une pluralité de prestataires de services, ledit gestionnaire de ressources comprenant au moins une partie de l'inventaire des ressources qui ont été préachetées.
